# EUROPÄISCHE PATENTSCHRIFT

(11) **EP 2 373 519 B1**
(45) Veröffentlichungstag und Bekanntmachung des Hinweises auf die Patenterteilung: **31.05.2017**
(21) Anmeldenummer: 09795703.9
(22) Anmeldetag: 14.12.2009
(51) Int. Cl.: B60N 2/42, B60N 2/24, B60N 2/02, B60N 2/06, B60N 2/16, B60N 2/22, B60R 11/02

(54) **SYSTEM ZUR MINENSICHEREN INTEGRATION VON HANDELSÜBLICHEN SITZEINRICHTUNGEN**
SYSTEM FOR ANTI-MINE PORTECTED INTEGRATION OF COMMERCIALLY AVAILABLE SEATS
SYSTÈME DE PROTECTION CONTRE LES MINES POUR L'INTÉGRATION DE SIÈGES VENDUE DANS LE COMMERCE

(30) Priorität: 19.12.2008 DE 102008063804
(43) Veröffentlichungstag der Anmeldung: 12.10.2011
(73) Patentinhaber: Rheinmetall Landsysteme GmbH, 29345 Unterlüß (DE)
(72) Erfinder: GERLACH, Klaus-Peter, 34302 Guxhagen (DE); ÖSTREICHER, Martin, 34346 Haan. Münden (DE); WEIBER, Andreas, 34127 Kassel (DE)
(74) Vertreter: Horn Kleimann Waitzhofer Patentanwälte PartG mbB
(86) Internationale Anmeldenummer: PCT/EP2009/008933
(87) Internationale Veröffentlichungsnummer: WO 2010/069533

(56) Entgegenhaltungen:
- EP-A2- 1 293 378
- DE-A1- 10 130 631
- DE-A1-102006 060 179
- DE-B3-102007 048 486

## Beschreibung

Die Erfindung beschäftigt sich mit der Problematik, handelsübliche Sitzeinrichtungen minensicher in ein Fahrzeug oder dergleichen einzubinden.

Um einen Schutz der Besatzung gegen Minen/Sprengladungen, die unter dem Fahrzeugboden detonieren, zu gewährleisten, ist es nötig, die Sitze minensicher zu befestigen, um so die Schockwelle, die durch den Blast in die Fahrzeugstruktur eingeleitet wird, von der Besatzung fernzuhalten.

Eine am Fahrzeugdach befestigte Sitzeinrichtung ist beispielsweise aus der DE 3734707 C2 bekannt. Eine Sitzträgerkonsole ist zur Höhenverstellung des Fahrzeugsitzes an einem Schlitten befestigt, welcher entlang zweier paralleler vertikaler Führungsschienen verschiebbar und in der jeweils gewählten Höhe mittels eines Rastbolzens an einer ebenfalls parallel zu den Führungsschienen verlaufenden Rastschiene befestigbar ist.

Aus der EP 1 593 542 A2 ist ein Sitz für ein gepanzertes Fahrzeug bekannt, der in einer oberen Aufhängung befestigt ist. Die Aufhängung selbst ist dabei als Aufhängungsgestänge ausgebildet und vom Fahrzeugboden vollständig entkoppelt.

Aus der WO 03/004958 A2 ist ein geschütztes Personenfahrzeug bekannt, bei welchem zwischen einem auf dem Boden aufruhenden Fuß oder Stuhlbein und dem am Sitz befestigten Teil mindestens eine Sollbruchstelle oder dergleichen vorgesehen ist.

Einen schocksicheren Sitz offenbart des Weiteren die DE 202 17 072 U1. Bei einer Druckwelle bzw. Detonation wird die Verbindung zwischen einem Sitz und der Decke gelöst. Der Sitz ist zudem zwischen von der Decke zum Boden gespannten Seilen geführt.

Die DE 101 30 631 A1 betrifft eine Befestigungsvorrichtung für einen Fahrzeugsitz in einem minengeschützten Fahrzeug. Der Fahrzeugsitz ist an einer Sitzkonsole befestigt, die über mindestens einen Tragarm am Dach oder dem oberen Bereich der Seitenwand des Fahrzeugs aufgehängt ist. Der Fahrzeugsitz selbst besitzt eine Sitzschale, an der eine Rückenlehne angeordnet ist. Die Sitzschale und die Rückenlehne sind auf der Sitzkonsole befestigt. Die Tragarme können als ein aus Hohlprofilen aufgebauter Rahmen ausgebildet sein. Die Sitzkonsole ist zum Fahrzeugboden hin über Gurtbänder abgespannt, die über eine Schraubverbindung am Fahrzeugboden befestigt sind.

Die EP 1 293 378 A2 offenbart eine Sitzeinrichtung in einem minengeschützten Kampffahrzeug. Eine im Bereich unterhalb einer Luke angeordnete Sitzeinrichtung besitzt ein Grundgestell, auf dem eine Sitzplatte angeordnet ist und an dem eine Rückenlehne schwenkbar befestigt ist. Das Grundgestell ist mittels einer Rohrkonstruktion an der Vorder- oder Seitenwand und / oder der Dachlatte der Fahrzeugwand derart aufgehängt, dass ein vorgegebener Abstand zum Boden nicht unterschritten wird. Das Grundgestell ist über Halterungen verschiebbar auf Führungsrohren angeordnet. Eine Antriebsvorrichtung zur Bewegung des Grundgestells ermöglicht den Fahrzeugsitz in eine angehobene Stellung direkt unterhalb der Lukenöffnung zu verschieben.

Die DE 10 2006 060 179 A1 beschreibt einen Gurtintegralsitz mit einer Längsverstellung, welche zwei Schienenpaare aufweist, mit einem Untergestell, das zwei vordere Schwenkstützen, zwei hintere Schwenkstützen und zwei von diesen Schwenkstützen getragene Seitenteile aufweist. Eine Rückenlehne ist über ein Lehnengelenk mit den Seitenteilen verbunden. Das Gurtschloss abgewandte Seitenteil ist schalenförmig ausgebildet und weist einen Boden und einen umlaufenden Profilrand auf.

Eine Dämpfungseinrichtung zwischen einem am Boden befestigten Teil und einer Sollbruchstelle sieht die DE 20 2004 012 857 U1 vor. Schock und Energie absorbierende Sitze verwendet das modulare Schutzsystem in der WO 2005/031245 A1.

Ein Fahrzeugsitz für minengeschützte Fahrzeuge kann des Weiteren der DE 101 30 632 A1 entnommen werden. Ein Untergestell am Sitz weist dabei ein Deformationselement auf.

Eine schwingende bzw. schwimmende Lagerung eines vom Fahrzeugboden entkoppelten Sitzes in Form von Gummi-Metall-Verbindungen publiziert die DE 20 2004 015 490 U1.

Nicht uninteressant ist zudem der Ansatz einer Sitzanordnung, wie sie in der DE 10 2007 048 486 B3 beschrieben wird. Die Sitzanordnung für Land-, See- oder Luftfahrzeuge weist einen das Gesäß eines Benutzers unterfangenden, vertikal verstellbaren Sitz sowie mehrere zwischen dem Sitz und Strukturteilen des Fahrzeugs angebrachte Seile auf. Der Sitz bildet mittelbar den Bestandteil einer Plattform, die entlang der Seile verlagerbar sowie in der jeweiligen Position an den Seilen lagefixierbar ist. Die Seile sind dabei über mindestens eine Höheneinstellvorrichtung geführt.

Jede dieser Konstruktionen verwendet dabei ein eigenes, individuelles Gebilde inklusive Sitz. Insbesondere ein Austausch des Sitzes gegen einen gleichen oder auch anderen Sitz ist nicht möglich.

Der Erfindung stellt sich die Aufgabe, eine Vorrichtung anzugeben, die einen universellen Einsatz für geschützte Sitze in Fahrzeugen aller Art erlaubt.

Unter Fahrzeuge aller Art werden neben Landfahrzeugen auch Luft- und Wasserfahrzeuge verstanden.

Gelöst wird die Aufgabe durch die Merkmale des Patentanspruchs 1. Vorteilhafte Ausgestaltungen sind in den Unteransprüchen aufgelistet.

Der Erfindung liegt die Idee zugrunde, eine Trageplattform zu schaffen, welche die Aufnahme herkömmlicher Sitzeinrichtungen, ob die einer Bahn, eines Flugzeuges oder eines Nutzfahrzeuges bzw. Personenkraftfahrzeuges ist, realisiert. Das minensichere Sitztragwerk zeichnet sich dadurch aus, dass die Anbindung als auch das Tragwerk selbst entsprechend der Minenbelastung ausgelegt werden können. Die Anbindung des Tragwerkes an einem Dach, wie Fahrzeugdach, erfolgt je nach Belastung starr, mittels Gurten oder über Crashelemente, die Anbindung an den Fahrzeugboden wird mit Hilfe von Gurten bewerkstelligt. Die Gurte können sich bei einem Einbeulen des Bodens entspannen, eine Krafteinleitung in die Sitze erfolgt nicht.
Die Einbindung der handelsüblichen Sitzeinrichtungen bzw. Sitzsystemen in das Tragwerk ist mittels eines Adapters geschaffen. Dabei wird sichergestellt, dass die Funktionen des Sitzsystems, wie Höhen, Sitztiefen- und/oder Rückenlehnenverstellung, Sitzheizung, taktile Information über die Einhaltung des Fahrzeugabstandes nach vorne, nach hinten und/oder seitlich, Spurtreue etc, beibehalten werden kann. Elektrische Anbindungen für diese Funktion können über das Tragwerk sicher an die jeweiligen Aktuatoren gelegt werden. Bevorzugt setzt sich das Tragwerk aus Hohlprofilen zusammen. Über diese können auch die elektrischen Leitungen geführt werden. Auch die sitzinternen Rückhaltesysteme (z.B. Beckengurt) können mitgenutzt werden. Separate Rückhaltesysteme (z.B. Seitengurte) können wie gewöhnlich seitlich an der Fahrzeugwand oder auch am Tragwerk eingebunden werden. Das Tragwerk kann alternativ aus GFK (glasfaserverstärkter Kunststoff) oder CFK (kohlenstofffaserverstärkter Kunststoff) aufgebaut bzw. die Struktur aus diesen gewickelt sein.
Der Minenschutz wird erfindungsgemäß ausschließlich durch das Sitztragwerk und dessen Anbindung erreicht. Es kann jeder Sitz, der zudem auch die gesetzlichen Bestimmungen gemäß ECE R 14 erfüllt, unabhängig von der Anbindung des Rückhaltesystems genutzt werden. Da auch die gute Verstellmöglichkeit des Standardsitzes beibehalten wird, ist der Einsatz derartiger Standardsitze möglich, was in der Praxis eine enorme Kosteneinsparung mit sich bringt. Ein späterer Austausch schafft zudem eine ergonomische Anpassbarkeit auf den Benutzer. So kann ein weicher Sitz schnell gegen einen Hartschalensitz usw. ausgetauscht werden etc. Durch die Nutzung von Gurten zur Befestigung am Fahrzeugboden ist das Tragwerk in verschiedenen Fahrzeugtypen/Fahrzeughöhen einbindbar.
Anhand eines einfachen Ausführungsbeispiels soll die Erfindung näher erläutert werden. Es zeigt:
- Fig. 1: ein erfindungsgemäßes Tragwerk mit Sitzeinbindung,
- Fig. 2: das Tragwerk mit Aufnahmemöglichkeit von diversen Geräten.

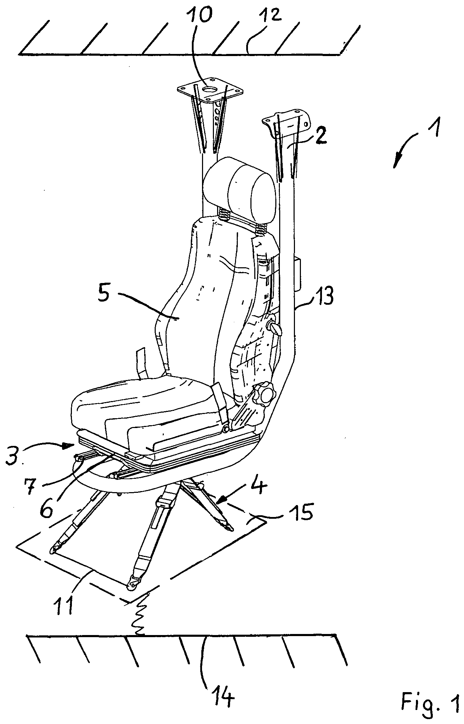

In Fig. 1 ist eine Sitzeinrichtung 1 mit einem Tragwerk 2 dargestellt, dass, wenn nötig, ein Adapter 3 aufnehmen kann. Das Tragwerk 2 verfügt über eine Fußbodenanbindung 11 mittels Gurte 4. Bevorzugt wird eine Anbindung mittels drei Gurten 4.

Die Fußbodenanbindung 11 kann ihrerseits direkt oder an eine bereits von der Fahrzeugwanne oder einem Boden 14 entkoppelten Basis 15 erfolgen. Die Anbindung des Tragwerkes 2 an ein (Fahrzeug)Dach 12 (leicht angedeutet) ist variabel und kann sich nach den vorhersehbaren (möglichen) Minenbelastungen richten. Die Befestigung kann starr (Verschraubung 10), mittels Gurten oder über Crashelemente am Dach (nicht näher dargestellt) erfolgen.

Das Tragwerk 2 bildet ein Stuhlgestell mit einer (offenen) Sitzfläche und ohne Stuhlbeine nach und besteht vorzugsweise aus einem, dieses Gebilde umschließenden gebogenen Hohlprofil 13.

Der Adapter 3 dient zur Aufnahme handelsüblicher Sitze 5, die über ein eigenes Verstell- und Funktionssystem verfügen.

In einer einfachsten Ausführung weist der Adapter eine Plattform 6 zur Aufnahme der bekannten Schienen 7 als die sich am meisten durchgesetzte Anbindung eines herkömmlichen Sitzes zu einem herkömmlichen Fahrzeugboden auf. Die Plattform 6 kann dabei auf dem Hohlprofil 13, die Schienen 7 des Sitzes 5 können ihrerseits durch Verschrauben auf dem Adapter 3 befestigt werden. Da die Anbindung an Fahrzeugboden eines PKW etc. nicht genormt ist, wird ein Wechsel des Sitzes 5 durch verschiedne Lochmuster, die mit den Schienen 7 kooperieren im Adapter 3 sehr sichergestellt. Der neue Sitz 5 wird dabei in die vorhandenen Befestigungslöcher seines Lochmusters auf den Adapter 3 eingebunden.

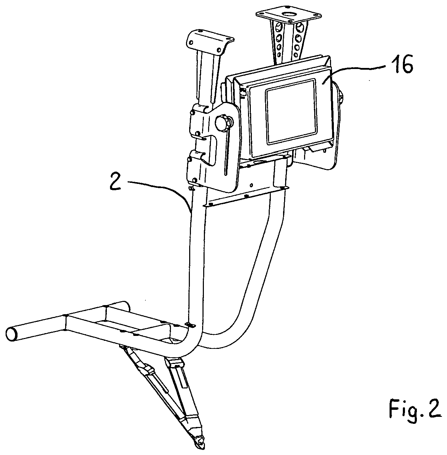

Fig. 2 zeigt eine Geräteanbindung, hier ein Monitor 16, an das Tragwerk 2. Andere Geräte, wie Bedienteil etc. sind ebenfalls anflanschbar.

## Patentansprüche

1. Minensichere Sitzeinrichtung (1), bestehend aus einem Tragwerk (2), das, entsprechend der zu erwartenden Minenbelastung starr, mittels Gurten oder über Crashelemente oben an einem Dach befestigbar ist, wobei das Tragwerk (2) über eine Fußbodenanbindung (11) mittels Gurte (4) verfügt, wobei auf dem Tragwerk (2) ein handelsüblicher Sitz (5) aufgenommen ist, der über eigene Verstellmöglichkeiten und / oder eigene Funktionsaktuatoren verfügt, wobei ein Adapter (3) vorhanden ist, der zur Aufnahme des handelsüblichen Sitzes (5) dient und der Adapter (3) ein Lochmuster besitzt, **dadurch gekennzeichnet, dass**
• der handelsübliche Sitz (5) über Schienen (7) verfügt,
• der Adapter (3) eine Plattform (6) zur Aufnahme der Schienen (7) des Sitzes (5) aufweist,
• der Adapter (3) verschiedene Lochmuster besitzt, die mit den Schienen (7) kooperieren,
• der Sitz (5) auf vorhandene Befestigungslöcher seines Lochmusters auf dem Adapter (3) eingebunden wird.

2. Minensichere Sitzeinrichtung (1) nach Anspruch 1, **dadurch gekennzeichnet, dass** das Tragwerk (2) durch Hohlprofile gebildet wird.

3. Minensichere Sitzeinrichtung (1) nach Anspruch 1 oder 2, **dadurch gekennzeichnet, dass** das Tragwerk (2) als auch die Hohlprofile durch GFK oder CFK gebildet werden.

4. Minensichere Sitzeinrichtung (1) nach einem der Ansprüche 1 bis 3, **dadurch gekennzeichnet, dass** der Sitz (5) am Adapter (3) verschraubt, vernietet oder dergleichen ist.

5. Minensichere Sitzeinrichtung nach einem der Ansprüche 1 bis 4, **dadurch gekennzeichnet, dass** das Tragwerk (2) ein Stuhlgestell mit einer offenen Sitzfläche und ohne Stuhlbeine nachbildet.

6. Minensichere Sitzeinrichtung (1) nach einem der Ansprüche 1 bis 5, **dadurch gekennzeichnet, dass** zur Höhenverstellung des Sitzes (5) am Tragwerk (2), Sitztiefenverstellung, Rückenlehnenverstellung sowie Armlehnenverstellung etc. die in den Sitz (5) eingebundenen bzw. vorhandenen Verstellmöglichkeiten genutzt und die im Sitz (5) eingebundenen Funktionen beibehalten werden.

7. Minensichere Sitzeinrichtung (1) nach einem der Ansprüche 1 bis 6, **dadurch gekennzeichnet, dass** die für die Funktionsaktuatoren notwendigen elektrischen Verbindungen durch die Hohlprofile des Tragwerkes (2) geführt und mit dem Sitz (5) entsprechend verbunden werden.

8. Fahrzeug mit einer minensicheren Sitzeinrichtung (1) nach einem der Ansprüche 1 bis 7.

9. Fahrzeug nach Anspruch 8, **dadurch gekennzeichnet, dass** die Fußbodenanbindung (11) direkt oder an eine bereits von einer Fahrzeugwanne oder einem Boden (14) entkoppelte Basis (15) erfolgt.

10. Fahrzeug nach Anspruch 9, **dadurch gekennzeichnet, dass** die Fußbodenanbindung (11) mittels drei Gurten (4) erfolgt.

## Claims

1. Mine-proof seat device (1), consisting of a framework (2) that can be fastened rigidly by means of belts or crash elements at the top, to a roof, wherein the framework (2) has a floor connection (11) by belts (4), wherein a standard seat (5) is hosted by the framework (2), the standard seat (5) having individual adjustment options and/or individual function actuators, wherein an adapter (3) for hosting the standard seat (5) is provided and the adapter (3) has a hole pattern, **characterized in that**
the standard seat (5) comprises rails (7),
the adapter (3) comprises a platform (6) for hosting the rails (7) of the seat (5),
the adapter (3) comprises different hole patterns that cooperate with the rails (7),
the seat (5) is engaged on existing fixing holes of its hole pattern on the adapter (3).

2. Mine-proof seat device (1) according to claim 1, **characterized in that** the framework (2) is formed by hollow profiles.

3. Mine-proof seat device (1) according to claim 1 or 2, **characterized in that** the framework (2) as well as the hollow profiles are formed from GFK or CFK.

4. Mine-proof seat device (1) according to any of claims 1 to 3, **characterized in that** the seat (5) is screwed, riveted, or the like to the adapter (3).

5. Mine-proof seat device (1) according to any of claims 1 to 4, **characterized in that** the framework (2) forms a chair frame with an open seating area and without chair legs.

6. Mine-proof seat device (1) according to any of claims 1 to 5, **characterized in that** the adjustment options of the seat (5) are used for height adjustment of the seat (5) on the framework (2), the seat depth adjustment, back rest adjustment as well as arm rest adjustment etc. and the seats' (5) functions are retained.

7. Mine-proof seat device (1) according to any of claims 1 to 6, **characterized in that** electrical connections, which are necessary for the function actuators, are guided through the hollow profiles of the framework (2) and connected to the seat (5) accordingly.

8. Vehicle with a mine-proof seat device (1) according to any of claims 1 to 7.

9. Vehicle according to claim 8, **characterized in that** the floor connection (11) is connected directly or to a decoupled base (15), which is decoupled from a vehicle hull or bottom (14).

10. Vehicle according to claim 9, **characterized in that** the floor connection (11) is implemented by three belts (4).

## Revendications

1. Système de siège anti-mines (1), composé d'un cadre porteur (2), qui peut être fixé de manière rigide, conformément à la charge attendue par les mines, au moyen de sangles ou en haut à un toit sur des éléments prévus en cas d'écrasement, le cadre porteur (2) disposant d'une liaison au plancher (11) au moyen de sangles (4) et, sur le cadre porteur (2), est reçu un siège usuel (5) qui dispose de possibilités de réglables propres et / ou d'actionneurs fonctionnels propres, un adaptateur (3) étant prévu pour servir à recevoir le siège usuel (5) et l'adaptateur (3) comprend une configuration de perçages, **caractérisé en ce que**
le siège usuel (5) dispose de rails (7),
l'adaptateur (3) présente une plateforme (6) pour recevoir les rails (7) du siège (5),
l'adaptateur (3) comprend différentes configurations de perçages qui coopèrent avec les rails (7),
le siège (5) est intégré sur des trous de fixation présents dans sa configuration de perçages sur l'adaptateur (3).

2. Système de siège anti-mines (1) selon la revendication 1, **caractérisé en ce que** le cadre porteur (2) est formé par des profilés creux.

3. Système de siège anti-mines (1) selon la revendication 1 ou 2, **caractérisé en ce que** le cadre porteur (2) tout comme les profilés creux sont composés d'une matière plastique renforcée de fibres de verre ou de fibres de carbone.

4. Système de siège anti-mines (1) selon une des revendications 1 à 3, **caractérisé en ce que** le siège (5) est vissé, riveté ou similaire, sur l'adaptateur (3).

5. Système de siège anti-mines selon une des revendications 1 à 4, **caractérisé en ce que** le cadre porteur (2) reproduit un cadre de chaise avec une surface de siège ouverte et sans aucun pied de chaise.

6. Système de siège anti-mines (1) selon une des revendications 1 à 5, **caractérisé en ce que**, pour le réglage en hauteur du siège (5) sur le cadre porteur (2), un réglage de la profondeur du siège, un réglage du dossier ainsi qu'un réglage des accoudoirs, etc., qui sont intégrés dans le siège (5) sont utilisés ou des possibilités de réglage présentes et les fonctions intégrées dans le siège (5) sont conservées.

7. Système de siège anti-mines (1) selon une des revendications 1 à 6, **caractérisé en ce que** les liaisons électriques nécessaires aux actionneurs fonctionnels sont guidées à travers les profilés creux du cadre porteur (2) et sont reliées de manière correspondante au siège (5).

8. Véhicule avec un système de siège anti-mines (1) selon une des revendications 1 à 7.

9. Véhicule selon la revendication 8, **caractérisé en ce que** la liaison au plancher (11) se fait directement ou au niveau d'une base (15) déjà découplée d'une carrosserie du véhicule ou d'un plancher (14).

10. Véhicule selon la revendication 9, **caractérisé en ce que** la liaison au plancher (11) se fait au moyen de trois sangles (4).
